Europäisches Patentamt

**European Patent Office**

Office européen des brevets

(19)

(11) Numéro de publication: **0 285 490**
**B1**

(12) **FASCICULE DE BREVET EUROPEEN**

(45) Date de publication du fascicule du brevet:
**19.09.90**

(51) Int. Cl.⁵: **B29C 63/02**
**// B29L11:00**

(21) Numéro de dépôt: **88400637.0**

(22) Date de dépôt: **17.03.88**

(54) **Procédé et appareil pour coller un film protecteur sur une face d'une série de lentilles ophtalmiques.**

(30) Priorité: **30.03.87 FR 8704375**

(43) Date de publication de la demande:
**05.10.88 Bulletin 88/40**

(45) Mention de la délivrance du brevet:
**19.09.90 Bulletin 90/38**

(84) Etats contractants désignés:
**AT DE ES GB NL**

(56) Documents cités:
**EP-A- 0 146 199**
**FR-A- 2 241 193**
**GB-A- 2 140 770**
**US-A- 3 445 981**
**US-A- 4 242 162**

(73) Titulaire: **ESSILOR INTERNATIONAL, Cie Générale
d'Optique, 1 Rue Thomas Edison, Echat 902,
F-94028 Créteil Cédex(FR)**

(72) Inventeur: **Herbin, Patrick, Rue du Château,
F-55500 Morlaincourt(FR)**
Inventeur: **Lacroix, Jean-Claude, 4 rue Jean Moulin,
F-55500 Ligny-en-Barrois(FR)**

(74) Mandataire: **Lefebure, Gérard et al, Office
Blétry 2, boulevard de Strasbourg, F-75010 Paris(FR)**

## Description

La présente invention concerne un procédé et un appareil pour coller un film protecteur sur une face d'une série de lentilles ophtalmiques suivant les préambules des revendications 1 et 6.

Dans le domaine de la fabrication des lentilles ophtalmiques, il est souvent nécessaire d'appliquer un film adhésif sur la surface d'une lentille pour la protéger contre les rayures ou contre les attaques par des corps étrangers, par exemple lors d'une opération dite de "blocage" ou de "glantage" d'une lentille (opération consistant à fixer un bloc métallique sur une face de la lentille, par coulée d'un métal à bas point de fusion, en vue du montage subséquent de la lentille sur le porte-lentille d'une machine à surfacer, d'une machine à déborder ou d'une machine à polir les lentilles ophtalmiques). L'application d'un tel film adhésif protecteur est tout particulièrement recommandé dans le cas des lentilles en une matière organique, mais elle peut aussi être effectuée dans le cas des lentilles en verre.

Pour appliquer le film adhésif sur une face d'une lentille, il est connu du document US-A 4 242 162, sur lequel sont bases les préambules des revendications 1 et 6, de placer la lentille dans une cavité ouverte vers le haut, sur un support pouvant être déplacé verticalement dans la cavité sous l'action d'un vérin. Un ruban adhésif est ensuite amené manuellement au-dessus de la cavité dans laquelle se trouve la lentille, et vient fermer celle-ci. Une mâchoire annulaire est ensuite déplacée manuellement et vient plaquer le ruban adhésif et le maintenir contre le bord de l'ouverture de la cavité. Le support de lentille est ensuite déplacé verticalement vers le haut au moyen du vérin, ce qui a pour effet d'appliquer le ruban adhésif contre la face supérieure de la lentille, eventuellement avec l'aide du vide si la cavité est reliée à une pompe à vide. Le ruban adhésif est ensuite découpé manuellement par l'opérateur autour de la lentille à l'aide d'un outil de coupe du genre "cutter". La mâchoire est ensuite ouverte manuellement et la lentille évacuée manuellement avec la rondelle de film adhésif collée sur sa face supérieure. Toutes ou presque toutes les opérations susindiquées étaient donc effectuées manuellement, donc à une cadence relativement lente. En outre, étant donné que le ruban adhésif est initialement plat et que la face à protéger de la lentille a habituellement une surface courbe, on ne peut généralement pas éviter la formation de plis pendant l'application du ruban adhésif sur la face de la lentille, en particulier lorsque ladite face de la lentille a une forte courbure (c'est-à-dire un faible rayon de courbure). De tels plis nuisent à une bonne adhérence du ruban adhésif sur la face de la lentille et à l'obtention d'une couche d'épaisseur uniforme entre la lentille et le bloc métallique qui est ultérieurement coulé sur le film adhésif.

La présente invention a donc pour but de fournir un procédé et un appareil permettant de coller un film protecteur sur une face d'une série de lentilles ophtalmiques à une cadence nettement plus élevée qu'avec la technique antérieurement connue.

Subsidiairement, la présente invention a également pour but de fournir un appareil du genre susindiqué dans lequel le film protecteur est appliqué sur la face de la lentille, sans qu'il se forme des plis, même si ladite face a un faible rayon de courbure.

Subsidiairement, l'invention a encore pour but de fournir un appareil du genre susindiqué, capable d'appliquer le film protecteur sur la totalité de la face de la lentille à protéger, quel que soit le diamètre de ladite lentille.

Le procédé de la présente invention pour coller un film protecteur sur une face d'une série de lentilles ophtalmiques comprend les opérations consistant à placer une lentille de ladite série de lentilles sur un support, à dérouler un rouleau d'un ruban composite formé d'un ruban adhésif, ayant une face adhésive, et d'un ruban pelable recouvrant ladite face adhésive, à séparer du ruban adhésif le ruban pelable pour permettre l'application du ruban adhésif sur une face de la lentille placée sur ledit support, et est caractérisé en ce qu'il comprend en outre les opérations consistant à poinçonner un trou de diamètre prédéterminé, plus grand que celui de la lentille, dans le ruban pelable séparé du ruban adhésif, à regrouper le ruban pelable poinçonné et le ruban adhésif de telle manière qu'une portion ronde de la face adhésive du ruban adhésif reste exposée à travers le trou du ruban pelable poinçonné, à faire passer le ruban pelable poinçonné et le ruban adhésif entre ledit support et un tampon d'appui, à appliquer ladite portion exposée de la face adhésive du ruban adhésif sur une face de la lentille placée sur le support, par déplacement relatif de l'un au moins dudit support et dudit tampon l'un vers l'autre, à découper le ruban adhésif autour du bord périphérique de la lentille, à évacuer la lentille avec la portion découpée de ruban adhésif collée sur la face de ladite lentille et formant ledit film protecteur, à évacuer la partie découpée restante du ruban adhésif et le ruban pelable poinçonné, et à répéter les opérations précédentes pour chaque lentille de ladite série.

De préférence, pendant l'opération d'application du ruban adhésif sur une face d'une lentille, le ruban pelable est poinçonné en préparation de l'opération d'application du ruban adhésif sur une face de la lentille suivante de ladite série de lentilles. En outre, pendant l'opération d'application du ruban adhésif sur une face d'une lentille et l'opération de découpage du ruban adhésif, le ruban composite est de préférence pincé entre deux mâchoires comportant des trous circulaires alignés ayant un diamètre intérieur correspondant au diamètre du trou poinçonné dans le ruban pelable.

L'appareil pour la mise en oeuvre du procédé de la présente invention est caractérisé en ce qu'il comprend en outre un premier jeu de rouleaux de guidage pour guider le ruban composite suivant un trajet prédéterminé, un second jeu de rouleaux de guidage pour guider le ruban pelable du ruban composite suivant un trajet en forme de boucle, qui s'écarte dudit trajet prédéterminé et revient se fondre avec celui-ci, un dispositif de poinçonnage placé sur le trajet en boucle pour poinçonner le ruban pelable, un support de lentille situé d'un côté dudit trajet prédéterminé du ruban composite, du côté du ruban pelable, en aval dudit trajet en boucle, un tampon d'appui situé de l'autre côté dudit trajet prédéterminé dans l'alignement du support de lentille, l'un au moins dudit support de lentille et dudit tampon d'appui étant monté mobile perpendiculairement audit trajet prédéterminé, au moins un moyen d'actionnement relié à l'un dudit support de lentille et dudit tampon pour presser entre eux le ruban composite, un dispositif de coupe situé sur le trajet prédéterminé du ruban composite en aval dudit trajet en boucle, et un moyen d'entraînement agissant sur le ruban composite pour le déplacer le long dudit trajet prédéterminé.

De préférence, le dispositif de poinçonnage comporte un poinçon et une matrice qui ont un diamètre plus grand que le plus grand diamètre existant de lentilles ophtalmiques. De préférence, le dispositif de coupe comprend un support monté à rotation autour d'un axe qui est perpendiculaire au trajet prédéterminé du ruban composite, deux lames de coupe qui sont montées sur ledit support et s'étendent parallèlement audit axe à equidistance de celui-ci, et un moteur accouplé audit support pour le faire tourner avec les deux lames de coupe autour dudit axe. Avantageusement, les deux lames de coupe sont réglables en écartement par rapport à l'axe de rotation du dispositif de coupe.

D'autres caractéristiques et avantages de la présente invention ressortiront mieux au cours de la description suivante, donnée à titre d'exemple en référence aux dessins annexés sur lesquels :

La figure 1 est une vue en partie en élévation latérale et en partie en coupe verticale, montrant un mode de réalisation de l'appareil de la présente invention.

La figure 2 est une vue en coupe montrant, à plus grande échelle, le dispositif de poinçonnage de l'appareil de la figure 1.

La figure 3 est une vue en partie en élévation latérale et en partie en coupe verticale, montrant, à plus grtande échelle, d'autres éléments actifs de l'appareil de la figure 1.

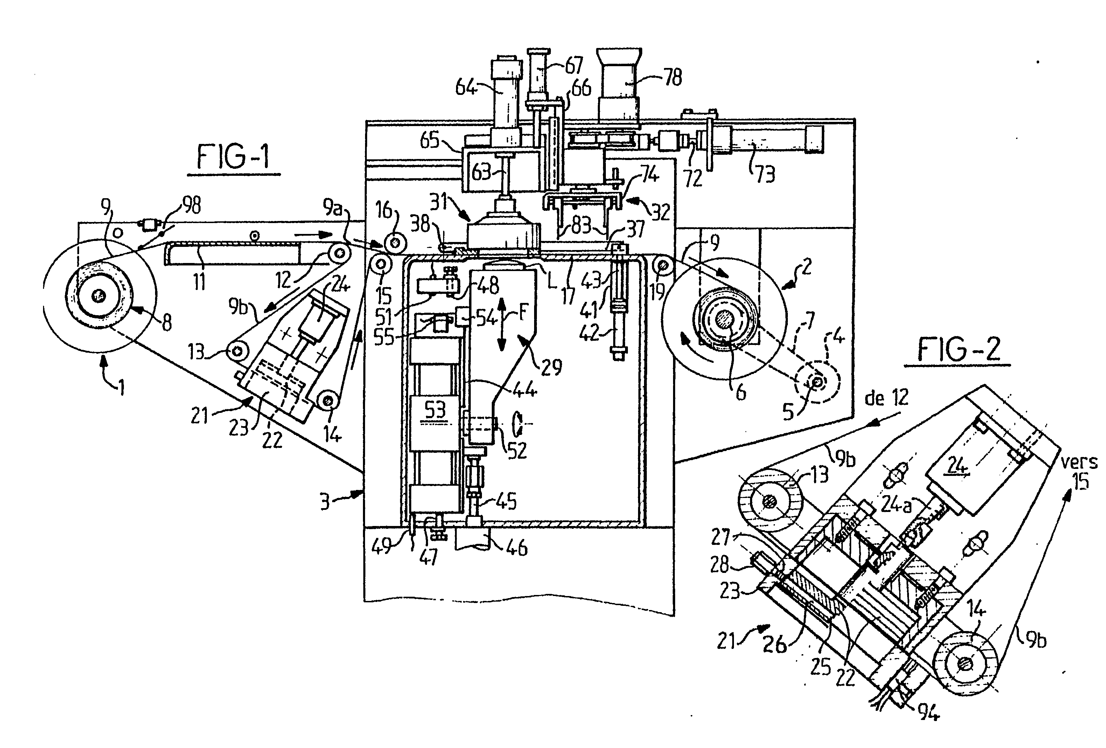

L'appareil de la figure 1, qui peut faire partie d'une machine de préparation et de "blocage" ou "glantage" de lentilles ophtalmiques, comprend une bobine dérouleuse 1 et une bobine enrouleuse 2, qui sont montées à rotation dans un châssis 3. La bobine enrouleuse 2 peut être entraînée en rotation par un moteur 4, par exemple un moteur électrique dont l'arbre de sortie 5 est relié à l'arbre d'entraînement 6 de la bobine enrouleuse 2 par une transmission appropriée 7, par exemple une transmission par chaîne.

La bobine dérouleuse 1 porte un rouleau 8 d'un ruban composite 9 formé d'un ruban adhésif 9a et d'un ruban pelable 9b recouvrant la face adhésive du ruban adhésif 9a. Le ruban composite 9, qui est déroulé du rouleau 8, passe tout d'abord au-dessus d'une première table 11, puis sur un rouleau de guidage 12 à la sortie duquel le ruban pelable 9b est séparé du ruban adhésif 9a. Ensuite, le ruban pelable 9b suit un trajet en boucle en passant successivement autour des deux rouleaux de guidage 13 et 14, et les deux rubans 9a et 9b sont regroupés en passant ensemble entre une paire de rouleaux 15 et 16. Ensuite, le ruban composite 9 passe au-dessus d'une seconde table 17, à faible distance de la face supérieure de celle-ci, puis autour d'un rouleau de guidage 19, pour être enfin réenroulé sur la bobine enrouleuse 2. Le ruban composite 9 peut être par exemple constitué par un ruban commercialisé par la Société "3M" sous la référence "1641".

L'appareil de la figure 1 comprend en outre un dispositif de poinçonnage 21 (montré plus en détails dans la figure 2), qui est installé sur le trajet en boucle suivi par le ruban pelable 9b, entre les rouleaux de guidage 13 et 14. De préférence, le poinçon 22 et la matrice 23 du dispositif de poinçonnage 21 ont respectivement un diamètre extérieur et un diamètre intérieur qui sont un peu plus grand que le plus grand diamètre existant de lentilles ophtalmiques. Par exemple, le diamètre du poinçon 22 et de la matrice 23 pourra être compris entre 85 et 90mm. Pour son actionnement, le poinçon 22 est relié à la tige de piston 24a d'un vérin 24, par exemple un vérin pneumatique. Chaque fois que le poinçon 22 est actionné, la rondelle découpée par celui-ci dans le ruban 9b est éjectée par soufflage d'air comprimé à travers un trou 25 percé au centre de la face frontale du poinçon 22. Le trou 25 communique avec un passage 26, qui est percé radialement dans le poinçon 22 et qui, lorsque celui-ci occupe la position représentée dans la partie gauche de la figure 2, communique lui-même avec un passage 27 percé radialement dans la matrice 23 et raccordé par un raccord 28 et par un tuyau (non montré) à une source d'air comprimé (également non montrée).

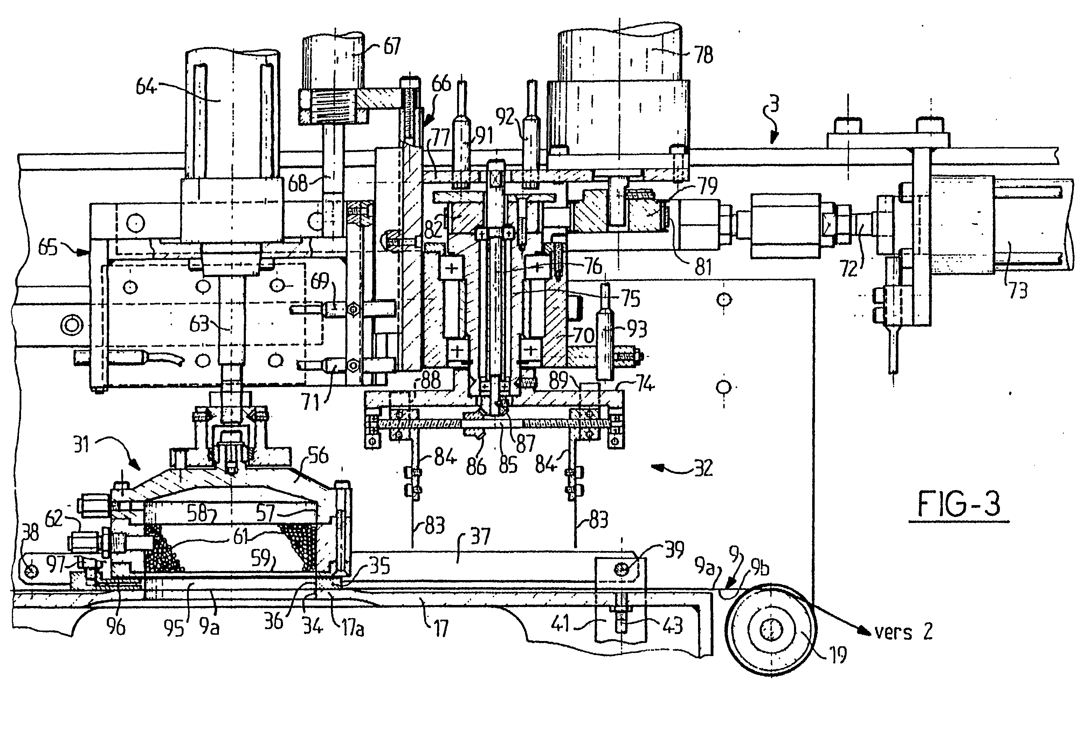

L'appareil de la figure 1 comprend en outre un support de lentille 29, un tampon d'appui 31 et un dispositif de coupe 32. Le support 29, sur lequel peut être posée une lentille L, dont l'une des deux faces, par exemple la face convexe, doit être recouverte d'un film protecteur, est situé au-dessous d'un trou circulaire 34 (mieux visible dans la figure 3) de la table 17. Le trou 34 a un diamètre égal ou légèrement plus grand que le diamètre des trous formés par le dispositif de poinçonnage 21 dans le ruban 9b. La lentille L peut être maintenue sur le support 29 par exemple au moyen d'un dispositif d'aspiration non montré. Le tampon d'appui 31 est situé au-dessus du ruban composite 9 et du trou 34. Le support 29 ou le tampon 31, de préférence les deux peuvent être déplacés l'un vers l'autre comme on le verra plus loin, pour appliquer le ruban adhésif 9a du ruban composite 9 sur la face exposée de la lentille L portée par le support 29.

Comme cela est plus particulièrement visible dans la figure 3, la région 17a de la table 17, qui borde le trou 34, est légèrement surélevée par rapport à la face supérieure plane de ladite table, de manière à former une mâchoire fixe apte à coopérer avec une mâchoire mobile 35 pour pincer le ruban composite pendant l'opération d'application du ruban adhésif 9a sur la face exposée de la lentille L et pendant l'opération de découpage du ruban adhésif (opérations qui seront décrites plus loin). La mâchoire mobile 35 comporte un trou circulaire 36 qui a un diamètre intérieur égal ou légèrement plus grand que celui du trou 34 et qui est axialement aligné avec celui-ci. La mâchoire mobile 35 s'étend entre et est fixée à deux bras parallèles 37, dont un seul est visible dans les dessins et qui sont montés pivotants, à une extrémité, autour d'un axe 38. A leur autre extrémité, les bras 37 sont articulés par un axe 39 respectivement sur les extrémités des branches d'un étrier 41 en forme de U. La partie de fond de l'étrier 41 est fixée au cylindre 42 d'un vérin, par exemple un vérin pneumatique, dont la tige de piston 43 est fixée à la table 17. Ainsi, en actionnant le vérin 42,43, la mâchoire mobile 35 peut être à volonté écartée du ruban composite 9 pour le libérer et permettre son avance, et serrée contre la mâchoire fixe 17a pour pincer le ruban 9.

Un chariot 44 (figure 1) est monté mobile par rapport à la table 17 dans une direction parallèle à l'axe du trou 34, comme indiqué par la double flèche F. Le chariot 44 est relié à la tige de piston 45 d'un vérin 46, par exemple un vérin pneumatique, et peut être déplacé entre deux positions limites définies respectivement par des butées réglables 47 et 48. Deux détecteurs 49 et 51 sont respectivement associés aux butées 47 et 48 et émettent un signal lorsque le chariot 44 arrive dans la position limite correspondante.

A son extrémité inférieure le support 29 est accouplé à un arbre 52 qui peut être tourné d'un angle prédéterminé, dans les deux sens de rotation, par un dispositif d'actionnement 53 porté par le chariot 44. Le dispositif d'actionnement 53 peut être par exemple constitué par un pignon qui est fixé à l'arbre 52 et qui est en prise avec une crémaillère reliée à un vérin, par exemple un vérin pneumatique. Ainsi, le support 29 peut être déplacé entre une première position dans laquelle le support 29 et la lentille L portée par celui-ci sont alignés avec le trou 34 de la table 37, et une seconde position dans laquelle le support 29 est écarté latéralement du trou 34. Les première et seconde positions du support 29 peuvent être définies par une pièce en saillie 54, qui est fixée sur un côté du support 29 et qui peut venir en contact avec l'une ou l'autre de deux butées (non montrées) fixées au chariot 44. Deux détecteurs (un seul détecteur 55 est visible dans la figure 1) sont respectivement associés à ces deux dernières butées et émettent un signal lorsque le support 29 se trouve dans la position correspondante.

Lorsque le chariot 44 est dans la position définie par la butée 47 et que le support 29 est dans la seconde position (écartée latéralement du trou 34 de la table 17), la partie supérieure du support 29 apparaît dans une fenêtre (non montrée) prévue dans le châssis de l'appareil. Dans cette position du support 29, une lentille L peut être posée sur le support 29 (éventuellement evacuée dudit support) manuellement ou au moyen d'un dispositif de transfert approprié. Lorsque le support 29 est dans sa première position (alignée avec le trou 34 de la table 17) et que le chariot 44 est déplacé par le vérin 46 dans la position définie par la butée 48, la lentille L préalablement mise en place sur le support 29 est pressée contre la face adhésive du ruban adhésif 9a du ruban composite 9 à travers le trou 34 de la table 17.

Le tampon d'appui 31 est conçu pour pouvoir épouser la forme de la surface exposée de la lentille L lorsque celle-ci est pressée contre le ruban adhésif 9a et repousse ce dernier contre le tampon d'appui 31. Bien que le tampon 31 puisse comporter un élément en une matière compressible et élastiquement déformable, il est de préférence constitué par un outil tel que celui décrit dans la demande de brevet Européen de la même demanderesse, déposée le 11 Mars 1988, sous le numéro 88 400577.8 et intitulée "Outil autoconformable à la surface d'une lentille ophtalmique". Brièvement, comme montré dans la figure 3, le tampon d'appui 31 comprend un support 56 comportant une cavité 57 ouverte vers la table 17. Deux membranes élastiquement déformables 58 et 59 sont fixées par leur bord périphérique aux parois latérales de la cavité 57 et définissent entre elles un espace qui est rempli d'une matière incompressible, en grains de petites dimensions, par exemple des billes 61 en verre ou en acier ayant un diamètre d'environ 1mm. Ainsi, lorsque la lentille L et le ruban 9a sont pressés contre la membrane 59, l'ensemble 58-61 se déforme et épouse étroitement la face adjacente de la lentille L. L'ensemble 58-61 peut être alors temporairement rigidifié, de manière à former une surface rigide d'appui, en effectuant le vide dans l'espace compris entre les deux membranes 58 et 59 à travers un orifice latéral du support 56 relié par un raccord 62 et par un tuyau (non montré) à une source de vide (également non montrée).

Le support 56 du tampon d'appui 31 est relié à l'extrémité inférieure de la tige de piston 63 d'un vérin, par exemple un vérin pneumatique, dont le cylindre 64 est fixé à un chariot 65. En actionnant le vérin 63,64, le tampon d'appui 31 peut être à volonté écarté du ruban composite 9 et de la table 17 et amené en contact avec la mâchoire mobile 35, à proximité immédiate de la face non-adhésive du ruban 9a. Le chariot 65 est monté mobile par rapport au châssis 3 et à la table 17, par exemple au moyen d'une glissière à billes, dans une direction parallèle au plan de la table et au trajet suivi par le ruban 9.

Le dispositif de coupe 32 est portée par un autre chariot 66, qui est monté mobile par rapport au chariot 65, par exemple au moyen d'une glissière à billes, dans une direction perpendiculaire au plan de la table 17 et au trajet suivi par le ruban 9. Au chariot 66 est fixé le cylindre 67 d'un vérin, par exemple un vérin pneumatique, dont la tige de piston 68 prend appui sur le chariot 65. Ainsi, en actionnant le vérin 67,68, le chariot 66 peut être déplacé entre une position haute dans laquelle le dispositif de coupe 32 est écarté du ruban 9, et une position basse dans laquelle le dispositif de coupe est opérationnel pour découper le ruban 9. Deux butées (non montrées) peuvent être prévues pour définir respectivement les positions haute et basse du chariot 66. Deux détecteurs 69 et 71 émettent des signaux respectivement lorsque le chariot 66 arrive dans sa position haute et lorsqu'il arrive dans sa position basse.

Le chariot 65 est relié à la tige de piston 72 d'un vérin, par exemple un vérin pneumatique, dont le cylindre 73 est fixé au châssis 3. Ainsi, en actionnant le vérin 72, 73, le chariot 65 peut être déplacé à volonté entre une première position limite, dans laquelle le tampon d'appui 31 est aligné avec le trou 34 de la table 17, et une seconde position limite, dans laquelle le dispositif de coupe 32 est aligné avec ledit trou 34. Des butées (non montrées) peuvent être prévues pour définir les deux positions limites susmentionnées du chariot 65. Des détecteurs peuvent être aussi prévus pour émettre des signaux respectivement lorsque le chariot 65 arrive dans sa première position limite et lorsqu'il arrive dans sa seconde position limite.

Comme montré dans la figure 3, le dispositif de coupe 32 peut comprendre un support 74, en forme de fourche, qui est fixé à l'extrémité inférieure d'un arbre creux 75 qui s'étend perpendiculairement à la table 17. L'arbre 75 est monté à rotation par des roulements appropriés dans un palier 70 fixé au chariot 66. Un arbre 76 s'étend à l'intérieur de l'arbre creux 75 et est fixé, à son extrémité supérieure, à une plaque 77, elle-même fixée au chariot 66. L'arbre 75 et le support 74 peuvent être entraînés en rotation autour de l'arbre 76 par un moteur 78, par exemple un moteur électrique. Une poulie crantée 79 fixée sur l'arbre de sortie du moteur 78 transmet le mouvement de rotation de celui-ci, par l'intermédiaire d'une courroie crantée 81, à une autre poulie crantée 82 fixée à l'arbre creux 75. Au moins une lame de coupe, de préférence deux lames de coupe 83, constituées par exemple par des lames de scalpel, sont montées sur le support 74 et s'étendent parallèlement à l'axe de l'arbre 76 à équidistance dudit axe. De préférence, les deux lames de coupe 83 sont réglables en écartement par rapport à l'axe de l'arbre 76, de telle façon que leur écartement puisse être ajusté en fonction du diamètre extérieur de la lentille sur laquelle le film protecteur doit être appliqué. A cet effet, chacune des deux lames de coupe 83 est fixée à un porte-lame 84. Une vis 85 est montée à rotation, à ses deux extrémités, par des roulements appropriés dans les deux branches du support 74 en forme de fourche. La vis 85 comporte deux parties filetées ayant des pas inversés, chacune des deux parties filetées étant engagée dans un trou taraudé correspondant de l'un des deux portes-lame 84. Un pignon conique 86 est fixé à la vis 85 dans sa partie médiane et est en prise avec un autre pignon conique 87 qui est fixé à l'arbre fixe 76. Deux pièces de guidage 88 et 89, respectivement fixées aux portes-lame 84 empêchent ceux-ci de tourner avec la vis 85, tout en leur permettant de se déplacer le long de ladite vis. Ainsi, du fait de l'engrènement entre le pignon fixe 87 et le pignon 86, lorsque l'arbre 75 et le support 74 sont entraînés en rotation par le moteur 78, les deux portes-lame 84 et les lames 83 y associées sont rapprochées ou écartées l'une de l'autre selon le sens de rotation du moteur 78. Les pas des deux filetages de la vis 85 ayant des valeurs connues et le rapport de transmission, qui est défini par les deux pignons 86 et 87 et par les deux poulies 81 et 82, ayant aussi une valeur connue, il est donc possible de régler de manière précise, chaque fois qu'on le désire, l'écartement entre les deux lames de coupe 83, en utilisant pour le moteur 78 un moteur pas à pas à commande numérique. Des capteurs 91,92 et 93 permettent de contrôler la rotation du dispositif de coupe 32 et la position des lames de coupe 83.

Les divers détecteurs décrits plus haut sont reliés électriquement à un boîtier de contrôle et de commande contenant un microprocesseur commandant le fonctionnement de l'appareil selon un cycle de fonctionnement qui va maintenant être décrit.

Le support de lentille 29 étant dans sa seconde position (écartée du trou 34 de la table 17) en attente d'une lentille, une lentille est posée sur ledit support 29 manuellement par un opérateur ou automatiquement au moyen d'un dispositif de transfert approprié. Ensuite, l'opérateur rentre sur un clavier (non montré) le code de fabrication de la lentille L, lequel code indique notamment au microprocesseur la valeur D du diamètre de la lentille, de telle sorte que le microprocesseur va pouvoir faire tourner le moteur 78 d'un nombre de tours approprié pour régler l'écartement des deux lames de coupe 83 du dispositif de coupe 32 à une valeur légèrement plus grande (par exemple : D+1mm) que celle du diamètre de la lentille L mise en place sur le support 29. Au lieu de rentrer le code de fabrication au moyen d'un clavier, on notera que le code pourrait avoir été inscrit au préalable sur la lentille elle-même, par exemple sous la forme d'un code à barres. Dans ce dernier cas, l'appareil peut être équipé d'un lecteur de code, qui lit le code à barres et le transmet au microprocesseur. Ensuite, le cycle de fonctionnement est lancé par une commande manuelle émise par l'opérateur et/ou par un signal de validation émis par un détecteur (non montré) qui peut être prévu sur le support 29 et qui émet ledit signal de validation lorsqu'il détecte la présence d'une lentille sur le support 29.

Ensuite, le moteur 4 est démarré pour entraîner la bobine 2 afin d'enrouler sur elle le ruban composite 9 et, par suite, afin de le dérouler à partir du rouleau 8 de la bobine 1. Le moteur 4 est arrêté lorsqu'un trou préalablement formé dans le ruban 9b du ruban composite 9 par le dispositif de poinçonnage 21 arrive en coïncidence avec le trou 34 de la table 17. Par exemple, le moteur 4 peut être arrêté par le signal émis par un détecteur 94 (figure 2), qui est porté par la matrice 23 et qui est agencé pour détecter le passage du bord arrière d'un trou qui vient d'être formé dans le ruban 9b par le dispositif de poinçonnage 21, à condition bien entendu que la longueur du trajet suivi par le ruban 9b entre le détecteur 94 et le bord du trou 34 de la table 17 ait été convenablement réglée au préalable de façon à correspondre à un multiple entier de la distance entre les centres de deux trous successifs formés dans le ruban 9b par le dispositif de poinçonnage 21.

Dans le même temps, le support 29 est amené par le dispositif d'actionnement 53 dans sa première position (alignée avec le trou 34 de la table 17). Immédiatement après l'arrêt du moteur 4, le vérin 42 est actionné afin de serrer fermement le ruban composite 9 entre la mâchoire mobile 35 et la mâchoire fixe 17a. Ensuite, le vérin 64 est actionné afin d'amener le tampon d'appui 31 dans sa position basse, en contact avec la mâchoire mobile 35. Ensuite, le vérin 46 est actionné afin de déplacer le chariot 44 et le support 29 vers le haut pour presser la lentille L contre la portion ronde de la face adhésive du ruban adhésif 9a, qui est exposée à travers le trou 34 de la table 17 et à travers le trou du ruban 9b du ruban composite. Ce faisant, la lentille L repousse le ruban adhésif 9a contre le tampon d'appui 31 qui, en se déformant, épouse la forme de la face supérieure de la lentille L. Etant donné que pendant cette opération le ruban composite 9 est fermement maintenu par les mâchoires 35 et 17a et étant donné que le ruban adhésif 9a est en une matière relativement extensible, le ruban adhésif est appliqué et collé sur la surface supérieure de la lentille L sans qu'il se forme des plis dans ledit ruban.

Pendant l'opération d'application du ruban adhésif sur la face supérieure de la lentille L, le vérin 24 est actionné afin de poinçonner un nouveau trou dans le ruban 9b.

Ensuite, suivant un mode possible de fonctionnement de l'appareil, le tampon d'appui 31 est relevé dans sa position haute au moyen du vérin 64, puis le chariot 65 est déplacé vers la gauche (vu dans les figures 1 et 3) au moyen du vérin 73, afin d'amener le dispositif de coupe 32 dans l'alignement du trou 34 de la table 17. Dans cette position, l'axe de l'arbre 76 est axialement aligné avec l'axe de la lentille porté par le support 29. Le vérin 67 est alors actionné de manière à abaisser le dispositif de coupe dont les deux lames 83 transpercent le ruban adhésif 9a. En supposant que le rapport de transmission déterminé par les deux poulies 79 et 82 et par les deux pignons coniques 86 et 87 est égal à 1 et que le pas des deux filetages de la vis 85 est égal à 0,5mm, le moteur 78 est alors actionné de telle façon que son arbre de sortie effectue un demi tour et que chacune des deux lames de coupe 83 décrit un arc de 180° pour découper le ruban adhésif 9a. En réalité, chacune des deux lames de coupe 83 décrit une portion de spirale. En effet, en plus de son mouvement de rotation, chaque lame de coupe se déplace, sous l'action de la vis 85, de 0,25mm en direction du bord de la lentille L. Il en résulte que la rondelle découpée par les lames 83 dans le ruban adhésif 9a reste attachée audit ruban en deux points diamétralement opposés de la rondelle, mais cela n'est pas gênant car les deux points d'attache sont très petits et peuvent être facilement rompus au moment de l'évacuation de la lentille L avec la rondelle adhésive collée sur sa face supérieure.

Ensuite, le dispositif de coupe 32 est relevé dans sa position haute au moyen du vérin 67 et le chariot 65 est ramené par le vérin 73 dans sa position initiale dans laquelle le tampon d'appui 31 est aligné avec le trou 34 de la table 17. Dans le même temps, le chariot 44 est abaissé dans sa position basse par le vérin 46, le support 29 est amené par le dispositif d'actionnement 53 dans sa seconde position (écartée du trou 34 de la table 17) pour permettre l'évacuation de la lentille L, manuellement ou au moyen d'un dispositif de transfert approprié, et la mise en place d'une nouvelle lentille sur le support 29, et la mâchoire mobile 35 est écartée du ruban composite 9 par le vérin 42 afin de libérer ledit ruban. Ensuite, le moteur 4 est à nouveau actionné et le cycle décrit ci-dessus recommence avec la nouvelle lentille placée sur le support 29.

Suivant un autre mode de fonctionnement, qui est préférable au mode de fonctionnement précédemment décrit du point de vue de la durée du cycle de fonctionnement, après que le ruban adhésif 9a a été appliqué sur la face supérieure de la lentille L de la manière décrite précédemment, on fait le vide dans l'espace 95 compris entre le ruban adhésif 9a et la membrane 59 du tampon d'appui 31, afin de maintenir la lentille L sous le tampon d'appui 31. A cet effet, la mâchoire mobile 35 comporte un passage 96 raccordé par un raccord 97 et par un tuyau (non montré) à une source de vide (également non montrée). Ensuite, le chariot 44 est amené dans sa position basse par le vérin 46, ce qui a pour effet d'abaisser le support 29, mais la lentille L reste supportée par le tampon d'appui 31 à la fois sous l'effet de la substance adhésive du ruban adhésif 9a et sous l'effet du vide et dans l'espace 95. Ensuite, le support 29 est amené dans sa seconde position par le dispositif d'actionnement 53 en attente d'une nouvelle lentille. Pendant ce temps, un dispositif de transfert (non montré) est amené au-dessous du trou 34 de la table 17 pour supporter la lentille L. La pression atmosphérique est alors rétablie dans l'espace 95 et le tampon d'appui 31 est amené dans sa position haute par le vérin 64. Ensuite, le chariot 65 est déplacé pour amener le dispositif de coupe 32 dans l'alignement du trou 34 de la table 17, et ledit dispositif de coupe est actionné comme décrit précédemment pour découper le ruban adhésif 9a autour du bord de la lentille L. Après cette opération de coupe, le dispositif de coupe est ramené dans sa position haute par le vérin 67, le chariot 65 est ramené dans sa position initiale par le vérin 73, la lentille L avec la rondelle adhésive collée sur sa face supérieure est evacuée vers un autre poste de traitement par le dispositif de transfert susmentionné, et enfin la mâchoire mobile 35 est écartée du ruban 9 par le vérin 42 afin de libérer ledit ruban. Un nouveau cycle de fonctionnement peut alors recommencer avec une nouvelle lentille préalablement mise en place sur le support 29 pendant l'opération de découpage du ruban adhésif 9a par le dispositif de coupe 32.

Un détecteur de fin de ruban 98 (figure 1) provoque l'arrêt total de l'appareil et l'émission d'un signal avertisseur, lorsqu'il détecte la fin du ruban 9. Dans ces conditions, un nouveau rouleau 8 de ruban composite 9 est installé sur la bobine dérouleuse 1. A l'extrémité avant du ruban composite 9 du nouveau rouleau 8, le ruban adhésif 9a est séparé du ruban pelable 9b et leurs extrémités avant sont raboutées respectivement aux extrémités arrière, encore présentes sur la table 11, du ruban adhésif 9a et du ruban pelable 9b du ruban composite 9 précédemment utilisé. En outre, si, à ce moment, la bobine enrouleuse 2 est pleine, le ruban composite 9 est avancé à travers l'appareil jusqu'à ce que le nouveau ruban composite 9 arrive au-delà du rouleau de guidage 19. Le ruban composite 9 est alors sectionné, le rouleau de ruban composite perforé présent sur la bobine enrouleuse 2 est évacué et l'extrémité avant du nouveau ruban composite 9 est attachée à la bobine enrouleuse 2. L'appareil est alors prêt à fonctionner à nouveau.

D'après ce qui précède, il est clair que le procédé et l'appareil de la présente invention qui ont été décrits ci-dessus permettent de coller un film protecteur en série sur des lentilles ophtalmiques, quel que soit leur diamètre, sans froissement du film protecteur et avec un minimum d'intervention humaine dans la mesure où l'appareil peut être largement automatisé. En outre, l'appareil peut opérer à une cadence relativement élevée. Selon des prévisions raisonnables, l'appareil pourra traiter environ cent cinquante lentilles par heure.

**Revendications**

1. Procédé pour coller un film protecteur sur une face d'une série de lentilles ophtalmiques, comprenant les opérations consistant à placer une lentille (L) de ladite série de lentilles sur un support (29), à dérouler un rouleau (8) d'un ruban composite (9) formé d'un ruban adhésif (9a), ayant une face adhésive, et d'un ruban pelable (9b) recouvrant ladite face adhésive, à séparer du ruban adhésif le ruban pelable pour permettre l'application du ruban adhésif sur une face de la lentille placée sur ledit support, caractérisé en ce qu'il comprend en outre les opérations consistant à poinçonner un trou de diamètre prédéterminé, plus grand que celui de la lentille, dans le ruban pelable séparé du ruban adhésif, à regrouper le ruban pelable poinçonné et le ruban adhésif de telle manière qu'une portion ronde de la face adhésive du ruban adhésif reste exposée à travers le trou du ruban pelable poinçonné, à faire passer le ruban pelable poinçonné et le ruban adhésif entre ledit support et un tampon d'appui (31), à appliquer ladite portion exposée de la face adhésive du ruban adhésif sur une face de la lentille placée sur le support, par déplacement relatif de l'un au moins dudit support et dudit tampon l'un vers l'autre, à découper le ruban adhésif autour du bord périphérique de la lentille, à évacuer la lentille avec la portion découpée de ruban adhésif collée sur la face de ladite lentille et formant ledit film protecteur, à évacuer la partie découpée restante du ruban adhésif et le ruban pelable poinçonné, et à répéter les opérations précédentes pour chaque lentille de ladite série.

2. Procédé selon la revendication 1, caractérisé en ce que pendant l'opération d'application du ruban adhésif (9a) sur une face d'une lentille (L), le ruban pelable (9b) est poinçonné en préparation de l'opération d'application du ruban adhésif sur une face de la lentille suivante de ladite série de lentilles.

3. Procédé selon la revendication 1 ou 2, caractérisé en ce que l'opération d'évacuation de la partie découpée restante du ruban adhésif (9a) et du ruban pelable poinçonné (9b) est effectuée par réenroulement des deux rubans ensemble sur une bobine enrouleuse (2) entraînée en rotation, la rotation de la bobine enrouleuse provoquant le déroulement du rouleau (8) de ruban composite (9) et le passage de celui-ci entre le support (29) et le tampon (31).

4. Procédé selon la revendicaiton 3, caractérisé en ce que la bobine enrouleuse (2) est entraînée en rotation par intermittence de façon à faire avancer pas à pas le ruban composite (9), et en ce que l'opération de poinçonnage du ruban pelable (9b), l'opération d'application du ruban adhésif (9a) sur une face d'une lentille (L) et l'opération de découpage du ruban adhésif (9a) autour du bord périphérique de la lentille sont effectuées chaque fois que le ruban composite (9) est immobile.

5. Procédé selon la revendication 4, caractérisé en ce que pendant l'opération d'application du ruban adhésif (9a) sur une face d'une lentille (L) et l'opération de découpage du ruban adhésif, le ruban composite (9) est pincé entre deux mâchoires (17a, 35) comportant des trous circulaires alignés (34, 36) ayant un diamètre intérieur correspondant au diamètre du trou poinçonné dans le ruban pelable (9b).

6. Appareil pour coller un film protecteur sur une face d'une série de lentilles ophtalmiques, comprenant un support de lentille (29), une bobine dérouleuse (1), qui porte un rouleau (8) de ruban composite (9) formé d'un ruban adhésif (9a), ayant une face adhésive, et d'un ruban pelable (9b) recouvrant ladite face adhésive, caractérisé en ce qu'il comprend en outre un premier jeu de rouleaux de guidage (12, 15, 16, 19) pour guider le ruban composite (9) suivant un trajet prédéterminé, un second jeu de rouleaux de guidage (12, 13, 14, 15) pour guider le ruban pelable (9b) du ruban composite suivant un trajet en forme de boucle, qui s'écarte dudit trajet prédéterminé et revient se fondre avec celui-ci, un dispositif de poinçonnage (21) placé sur ledit trajet en boucle pour poinçonner le ruban pelable (9b), ledit support de lentille (29) étant situé d'un côté du trajet prédéterminé du ruban composite, du côté du ruban pelable, en aval dudit trajet en boucle, un tampon d'appui (31) situé de l'autre côté dudit trajet prédéterminé dans l'alignement du support de lentille, l'un au moins dudit support de lentille (29) et dudit tampon d'appui (31) étant monté mobile perpendiculairement audit trajet prédéterminé, au moins un moyen d'actionnement (46, 64) relié à l'un dudit support de lentille et dudit tampon pour presser entre eux le ruban composite (9), un dispositif de coupe (32) situé sur ledit trajet prédéterminé du ruban composite en aval dudit trajet en boucle, et un moyen d'entraînement (2, 4, 5, 6, 7) agissant sur le ruban composite (9) pour le déplacer le long dudit trajet prédéterminé.

7. Appareil selon la revendication 6, caractérisé en ce que le dispositif de poinçonnage (21) comporte un poinçon (22) et une matrice (23) qui ont un diamètre plus grand que le plus grand diamètre existant de lentilles ophtalmiques.

8. Appareil selon la revendication 6 ou 7, caractérisé en ce que ledit moyen d'entraînement comprend une bobine enrouleuse (2) entraînée en rotation par un premier moteur (4).

9. Appareil selon la revendication 8, caractérisé en ce que le premier moteur (4) est entraîné en rotation par intermittence.

10. Appareil selon la revendication 9, caractérisé en ce qu'il comprend une table fixe (17), qui est situé d'un côté du trajet prédéterminé du ruban composite (9), du côté du ruban pelable (9b), en aval dudit trajet en boucle du ruban pelable et qui comporte un trou circulaire (34) dont le diamètre correspond au diamètre du trou formé par le dispositif de poinçonnage (21) dans le ruban pelable, un premier chariot (44) qui est monté mobile par rapport à la table dans une direction parallèle à l'axe du trou (34) de la table, ledit support de lentille (29) étant monté mobile par rapport au premier chariot (44) entre une première position dans laquelle le support de lentille est aligné avec le trou de la table, et une seconde position dans laquelle le support de lentille est écarté latéralement dudit trou pour recevoir une lentille (L), un premier moyen d'actionnement (53) monté sur le premier chariot (44) et relié au support de lentille (29) pour déplacer celui-ci entre ses première et seconde positions, et un second moyen d'actionnement (46) relié au premier chariot (44) pour déplacer celui-ci et le support de lentille (29), lorsqu'il est dans sa première position, entre une première position dans laquelle la lentille (L) portée par le support de lentille est écartée du trou (34) de la table (17), et une seconde position dans laquelle ladite lentille est pressée contre la face adhésive du ruban adhésif (9a) à travers le trou (34) de la table et un trou du ruban pelable (9b).

11. Appareil selon la revendication 10, caractérisé en ce qu'il comprend en outre en second chariot (65) qui est monté mobile par rapport à la table (17) dans une direction parallèle au trajet prédéterminé du ruban composite (9), un troisième moyen d'actionnement (64) monté sur le second chariot et relié au tampon d'appui (31) pour déplacer celui-ci entre une première position dans laquelle le tampon d'appui est écarté du ruban composite (9), et une second position dans laquelle ledit tampon d'appui est à proximité immédiate de la face non-adhésive du ruban adhésif (9a) du ruban composite, un troisième chariot (65) monté mobile sur le second chariot (65) dans une direction perpendiculaire au trajet prédéterminé du ruban composite (9), ledit dispositif de coupe (32) étant porté par le troisième chariot, un quatrième moyen d'actionnement (67) monté entre les second et troisième chariots (65 et 66) pour déplacer ledit troisième chariot entre une première position dans laquelle le dispositif de coupe (32) est écarté du ruban compsite (9), et une seconde position dans laquelle le dispositif de coupe est opérationnel pour découper le ruban adhésif (9a), et un quatrième moyen d'actionnement (73) relié au second chariot (65) pour le déplacer entre une première position dans laquelle le tampon d'appui (31) est aligné avec le trou (34) de la table (17), et une seconde position dans laquelle le dispositif de coupe (32) est aligné avec ledit trou (34) de la table.

12. Appareil selon la revendication 11, caractérisé en ce que le dispositif de coupe (32) comprend un support (74, 75) monté à rotation sur le troisième chariot (66) autour d'un axe (76) qui est perpendiculaire au trajet prédéterminé du ruban composite (9) et qui, dans la seconde position du second chariot (65), est aligné avec l'axe du trou (34) de la table (17), deux lames de coupe (83) qui sont montées sur ledit support (74, 75) et s'étendant parallèlement audit axe (76) à équidistance de celui-ci, et un second moteur (78) monté sur le trosième chariot (66) et accouplé audit support (74, 75) pour le faire tourner avec les deux lames de coupe (83) autour dudit axe (76).

13. Appareil selon la revendication 12, caractérisé en ce que les deux lames de coupe 83) sont réglables en écartement par rapport audit axe (76).

14. Appareil selon l'une quelconque des revendications 10 à 13, caractérisé en ce qu'il comprend en outre une mâchoire mobile (35) comportant un trou circulaire (36) qui a un diamètre intérieur correspondant au trou (34) de la table (17) et qui est axialement aligné avec ledit trou (34), ladite mâchoire (35) étant montée mobile par rapport à la table (17) dans une direction sensiblement parallèle à l'axe du trou (34) de la table, et un cinquième moyen d'actionnement (42) relié à la mâchoire mobile (35) pour la déplacer entre une première position dans laquelle elle est écartée du ruban composite (9), et une second position dans laquelle le ruban composite est pincé entre ladite mâchoire mobile et la région (17a) de la table (17) qui borde le trou (34) de celle-ci et qui forme une mâchoire fixe.

**Patentansprüche**

1. Verfahren zum Auftragen einer Schutzschicht auf einer Seite einer Serie ophtalmischer Linsen mit den Verfahrensschritten Plazieren einer Linse (L) der Linsenserie auf einer Auflage (29), Abrollen einer Trommel (8) eines Verbundbandes (9), gebildet aus einem Klebeband (9a) mit einer Klebeseite und aus einem die Klebeseite überziehenden abziehbaren Band (9b), Abziehen des abziehbaren Bandes vom Klebeband, um das Aufbringen des Klebebandes auf einer Seite der auf der Auflage abgesetzten Linse zu ermöglichen, gekennzeichnet durch die Verfahrensschritte Stanzen eines Loches mit vorgewähltem größerem Durchmesser als dem der Linse in das vom Klebeband abgezogene abziehbare Band, Neuschichten des gestanzten abziehbaren Bandes und des Klebebandes, so daß ein runder Teil der Klebeseite des Klebebandes durch das Loch des abziehbaren Bandes hindurch offen bleibt, Führen des gestanzten abziehbaren Bandes und des Klebebandes zwischen der Auflage und einem Haltestempel (31), Aufbringen des offenen Teils der Klebeseite des Klebebandes auf einer Seite der auf der Auflage plazierten Linse durch Verschieben von mindestens der Auflage und des Haltestempels relativ zueinander, Abschneiden des Klebebandes um den Umfangsrand der Linse herum, Austragen der Linse, auf deren Oberfläche der abgeschnittene Teil des Klebebands aufgeklebt ist und die Schutzschicht bildet, Austragen des verbleibenden abgeschnittenen Teils des Klebebands und des gestanzten abziehbaren Bandes, Wiederholen der vorstehenden Verfahrensschritte für jede Linse der Serie.

2. Verfahren gemäß Anspruch 1, dadurch gekennzeichnet, daß beim Aufbringen des Klebebands (9a) auf eine Seite einer Linse (L) das abziehbar Band (9b) gestanzt wird durch Vorbereiten des Auftragungsschrittes des Klebebandes auf eine Seite der Linse nach der Serie der Linsen.

3. Verfahren nach Anspruch 1 oder 2, dadurch gekennzeichnet, daß das Austragen des verbleibenden abgeschnittenen Teils des Klebebands (9a) und des gestanzten abziehbaren Bandes (9b) so wird, daß man die beiden Bänder zusammen auf einer durch Drehung angetriebene Aufwickelspule (2) aufwickelt, wobei die Drehung der Aufwickelspule das Abwickeln der Trommel (8) des Verbundbandes (9) bewirkt sowie dessen Durchführen zwischen der Auflage (29) und dem Haltestempel (31).

4. Verfahren gemäß Anspruch 3, dadurch gekennzeichnet, daß der Drehantrieb der Aufwickelspule (2) intermittierend erfolgt indem man das Verbundband (9) schrittweise fortbewegt, und daß das Stanzen des abziehbaren Bandes (9b), das Aufbringen des Klebebands (9a) auf eine Seite einer Linse (L) und das Abschneiden des Klebebands (9a) um den Außenrand der Linse herum jedes Mal dann erfolgt, wenn das Verbundband (9) still steht.

5. Verfahren nach Anspruch 4, dadurch gekennzeichnet, daß beim Aufbringen des Klebebands (9a) auf eine Seite einer Linse (L, und beim Abschneiden des Klebebands das Verbundband (9) zwischen zwei Klemmbacken (17a, 35) eingeklemmt wird, die gerade kreisförmige Öffnungen (34, 36) mit einem inneren Durchmesser aufweisen, der dem Durchmesser des in das abziehbare Band (9b) gestanzten Loches entspricht.

6. Vorrichtung zum Auftragen einer Schutzschicht auf einer Seite einer Serie ophtalmischer Linsen, mit einer Linsenauflage (29), einer Abwickelspule (1), welche eine Trommel (8) eines Verbundbandes (9) trägt, welches gebildet wird von einem Klebeband (9a) mit einer Klebeseite und einem die Klebeseite abdeckenden abziehbaren Band (9b), gekennzeichnet durch einen ersten Satz von Führungsrollen (12, 15, 16, 19) zum Führen des Verbundbandes (9) längs eines vorbestimmten Wegs, einen zweiten Satz von Führungsrollen (12, 13, 14, 15) zum Führen des abziehbaren Bandes (9b) des Verbundbandes längs eines schleifenförmigen Weges, der sich von dem vorbestimmten Weg entfernt und sich mit ihm wieder vereinigt, eine auf dem schleifenförmigen Weg aufgestellte Stanzvorrichtung (21) zum Stanzen des abziehbaren Bands (9b), wobei die Linsenauflage (29) auf einer Seite des vorbestimmten Wegs des Verbundbandes auf der Seite des abziehbaren Bandes in Bewegungsrichtung abwärts vom schleifenförmigen Weg aufgestellt ist, einen Haltestempel (31), der auf der anderen Seite des vorbestimmten Wegs in Ausrichtung mit der Linsenauflage angeordnet ist, wobei wenigstens die Linsenauflage (29) oder der Haltestempel (31) senkrecht zum vorbestimmten Weg beweglich angebracht sind, mindestens eine Betätigungseinrichtung (46, 64), die mit der Linsenauflage oder dem Haltestempel verbunden ist, um zwischen diesen das Verbundband (9) einzupressen, eine Schneidvorrichtung (32), die auf dem vorbestimmten Weg des Verbundbandes in Bewegungsrichtung abwärts von dem schleifenförmigen Weg angeordnet ist, und eine auf das Verbundband (9) wirkende Antriebseinrichtung (2, 4, 5, 6, 7), um dieses längs des vorbestimmten Weges zu verschieben.

7. Vorrichtung nach Anspruch 6, dadurch gekennzeichnet, daß die Stanzvorrichtung (21) einen Stanzstempel (22) und eine Stanzform (23) aufweist, die einen größeren Durchmesser haben als der größte vorhandende Durchmesser der ophtalmischen Linsen.

8. Vorrichtung nach Anspruch 6 oder 7, dadurch gekennzeichnet, daß die Antriebseinrichtung eine Aufwickelspule (2) aufweist, die zur Drehung durch einen ersten Motor (4) angetrieben wird.

9. Vorrichtung nach Anspruch 8, dadurch gekennzeichnet, daß der erste Motor (4) zur Drehung intermittierend angetrieben wird..

10. Vorrichtung nach Anspruch 9, gekennzeichnet durch einen feststehenden Tisch (17), der angeordnet ist an einer Seite der vorbestimmten Wegs des Verbundbandes (9) auf der Seite des abziehbaren Bandes (9b) in Bewegungsrichtung abwärts vom schleifenförmigen Weg des abziehbaren Bandes, und der eine kreisförmige Öffnung (34) aufweist, deren Durchmesser dem Durchmesser des Loches entspricht, welches durch die Stanzvorrichtungen (21) in dem abziehbaren Band gebildet wird, einen ersten Schlitten (44), der bezüglich des Tisches in einer Richtung parallel zur Achse der Öffnung (34) des Tisches beweglich ist, wobei die Linsenauflage (29) beweglich zum ersten Schlitten (44) zwischen einer ersten Position angebracht ist, in der die Linsenauflage mit der Öffnung des Tisches fluchtet und einer zweiten Position, in der die Linsenauflage seitlich von der Öffnung zur Aufnahme einer Linse (L) entfernt ist, eine erste Betätigungseinrichtung (53), die auf dem ersten Schlitten (44) angebracht und mit der Linsenauflage (29) verbunden ist, um diese zwischen ihrer ersten und zweiten Position zu verschieben, und einer zweiten, mit dem ersten Schlitten (44) verbundenen zweiten Betätigungseinrichtung (46), um diesen und die Linsenauflage (29) zu verschieben, wenn sie sich in ihrer ersten Position befindet, zwischen einer ersten Position, in der die von der Linsenauflage getragene Linse (L) von der Öffnung (34) des Tisches (17) entfernt ist und einer zweiten Position, in der die Linse gegen die Klebeseite des Klebebandes (9a) durch die Öffnung (34) des Tisches und ein Loch des abziehbaren Bandes (9b) gedrückt wird.

11. Vorrichtung nach Anspruch 10, gekennzeichnet durch einen zweiten Schlitten (65), der bezüglich des Tisches (17) in Parallelrichtung zum vorbestimmten Weg des Verbundbandes (9) beweglich angebracht ist, eine dritte Betätigungseinrichtung (64), die auf dem zweiten Schlitten angebracht und mit dem Haltestempel (31) verbunden ist, um diesen zu verschieben zwischen einer ersten Position, in der der Haltestempel vom Verbundband (9) entfernt ist und einer zweiten Position, in der der Haltestempel sich in unmittelbarer Nähe der nichtklebenden Seite des Klebebandes (9a) des Verbundbandes befindet, einem dritten Schlitten (66), der auf dem zweiten Schlitten (65) in einer Richtung beweglich angebracht ist, die senkrecht zum vorbestimmten Weg des Verbundbandes (9) ist, wobei die Schneidvorrichtung (32) von dem dritten Schlitten getragen wird, einer vierten Betätigungseinrichtung (67), die zwischen dem ersten und zweiten Schlitten (65 und 66) angebracht ist, um den dritten Schlitten zu verschieben zwischen einer ersten Position, in der die Schneidvorrichtung (32) vom Verbundband (9) entfernt ist und einer zweiten Position, in der die Schneidvorrichtung zum Schneiden des Klebebandes (9a) einsatzbereit ist, und eine vierte Betätigungseinrichtung (73), die mit dem zweiten Schlitten (65) verbunden ist, um ihn zu verschieben zwischen einer ersten Position, in der der Haltestempel (31) mit der Öffnung (34) des Tisches (17) fluchtet und einer zweiten Position, in der die Schneidvorrichtungen (32) mit der Öffnung (34) des Tisches fluchtet.

12. Vorrichtung nach Anspruch 11, dadurch gekennzeichnet, daß die Schneidvorrichtung (32) aufweist: eine Auflage (74, 75), welche auf dem dritten Schlitten (66) drehbar um eine Achse (76) angebracht ist, die senkrecht zum vorbestimmten Weg des Verbundbandes (9) ist, und die in der zweiten Position des zweiten Schlittens (65) mit der Achse der Öffnung (34) des Tisches (17) fluchtet, zwei Schneidmesser (83), die auf der Auflage (74, 75) angebracht und sich parallel zur Achse (76) äquidistant dazu erstrecken, und einen zweiten Motor (78), der auf dem dritten Schlitten (66) angebracht und an die Auflage (74, 75) angekoppelt ist, um diese mit den zwei Schneidmessern (83) um die Achse (76) zu drehen.

13. Vorrichtung nach Anspruch 12, dadurch gekennzeichnet, daß die zwei Schneidmesser (83) in ihrer Entfernung bezüglich der Achse (76) verstellbar sind.

14. Vorrichtung nach einem der Ansprüche 10 bis 13, gekennzeichnet durch einen beweglichen Klemmbacken (35), der eine kreisförmige Öffnung (36) trägt, die einen der Öffnung (34) des Tisches (17) entsprechenden inneren Durchmesser aufweist und die mit der Öffnung (34) axial fluchtet, wobei der Klemmbacken (35) bezüglich des Tisches (17) beweglich montiert ist in einer im wesentlichen parallelen Richtung zur Achse der Öffnung (34) des Tisches, und eine fünfte Betätigungseinrichtung (42), die mit den beweglichen Klemmbacken (35) vebunden ist, um ihn zu verschieben zwischen einer ersten Position, in der er vom Verbundband (9) entfernt ist und einer zweiten Position, in der das Verbundband eingeklemmt ist zwischen dem beweglichen Klemmbacken und dem Bereich (17a) des Tisches (17), der dessen Öffnung (34) trägt und einen festehenden Klemmbacken bildet.

**Claims**

1. Process for cementing a protective film to a surface of a series of ophthalmic lenses, comprising the operations of placing a lens (L) of the said series of lenses on a support (29), unwinding a roll (8) of a composite tape (9) formed from an adhesive tape (9a) having an adhesive surface and a peeloff tape (9b) covering the said adhesive surface, removing the peel-off tape from the adhesive tape in order to permit application of the adhesive tape to the surface of the lens placed on the said support, characterised in that the process also comprises the operations of punching a hole of predetermined diameter, larger than that of the lens, in the peel-off tape separated from the adhesive tape, recombining the punched peel-off tape and the adhesive tape so that a round portion of the adhesive surface of the adhesive tape remains exposed through the hole of the punched peel-off tape, passing the punched peel-off tape and the adhesive tape between the said support and a buffer (31), applying the said exposed portion of the adhesive surface of the adhesive tape to a surface of the lens placed on the support, by relative mutual displacement of one at least of the said support and said buffer, cutting the adhesive tape around the circumference of the lens, removing the lens together with the cut portion of adhesive tape cemented to the surface of the said lens and forming the said protective film, removing the remaining cut part of the adhesive tape and the punched peel-off tape, and repeating the preceding operations for each lens of the said series.

2. Process according to Claim 1, characterised in that during the application operation of the adhesive tape (9a) on a surface of a lens (L), the peel-off tape (9b) is punched in preparation for the application of the adhesive tape to a surface of the next lens of the said series of lenses.

3. Process according to Claim 1 or 2, characterised in that the removal operation of the remaining cut part of the adhesive tape (9b) and punched peel-off tape (9b) is effected by rewinding the two tapes together on a rotatably driven winding spool (2), the rotation of the winding spool producing the unwinding of the roll (8) of composite tape (9) and the passage of the latter between the support (29) and buffer (31).

4. Process according to Claim 3, characterised in that the winding spool 2 is intermittently rotatably driven so as to advance stepwise the composite tape (9), and in that the punching operation of the peel-off tape (9b), the application operation of the adhesive tape (9a) to a surface of a lens (L), and the cutting operation of the adhesive tape (9a) around the circumference of the lens are effected each time the composite tape (9) is immobile.

5. Process according to Claim 4, characterised in that during the application operation of the adhesive tape (9a) to a surface of a lens (L) and the cutting operation of the adhesive tape, the composite tape is squeezed between two jaws (17a, 35) comprising aligned circular holes (34, 36) having an internal diameter corresponding to the diameter of the hole punched in the peel-off tape (9b).

6. Apparatus for cementing a protective film to a surface of a series of ophthalmic lenses, comprising a lens support (29), an unwinding spool (1) which carries a roll (8) of composite tape (9) formed of an adhesive tape (9a) having an adhesive surface and a peel-off tape (9b) covering said adhesive surface, characterised in that it also comprises a first set of guide rollers (12, 15, 16, 19) in order to guide the composite tape (9) according to a predetermined path, a second set of guide rollers (12, 13, 14, 15) in order to guide the peel-off tape (9b) of the composite tape according to a looped path that diverges from the said predetermined path and then rejoins the latter, a punching device (21) installed on the said looped path to punch the peel -off tape (9b), the said lens support (29) being situated on one side of the predetermined path of the composite tape, on the side of the peel-off tape, behind the said looped path, a buffer (31) situated on the other side of the said predetermined path and aligned with the lens support, one at least of the said lens support (29) and buffer (31) being movably mounted perpendicular to the said predetermined path, at least one actuating means (46, 64) connected to one of said lens support and said buffer in order to press the composite tape (9) between them, a cutting device (32) installed on the said predetermined path of the composite tape behind the said looped path, and a drive means (2, 4, 5, 6, 7) acting on the composite tape (9) in order to displace it along the said predetermined path.

7. Apparatus according to Claim 6, characterised in that the punching device (21) comprises a punch (22) and a matrix (23) which have a diameter that is larger than the largest existing diameter of ophthalmic lenses.

8. Apparatus according to Claim 6 or 7, characterised in that the said drive means comprises a winding spool (2) rotatably driven by a first motor (4).

9. Apparatus according to Claim 8, characterised in that the first motor (4) is intermittently rotatably driven.

10. Apparatus according to Claim 9, characterised in that it comprises a fixed Table 17 which is situated on one side of the predetermined path of the composite tape (9), on the side of the peel-off tape (9b), behind the said looped path of the peel-off tape, and which comprises a circular hole (34) whose diameter corresponds to the diameter of the hole formed by the punching device (21) in the peel-off tape, a first carriage (44) which is movably mounted with respect to the Table in a direction parallel to the axis of the hole (34) of the Table, the said lens support (29) being movably mounted with respect to the first carriage (44) between a first position in which the lens support is aligned with the hole of the Table and a second position in which the lens support is displaced laterally from the said hole in order to receive a lens (L), a first actuating means (53) mounted on the first carriage (44) and connected to the lens support (29) in order to displace the latter between its first and second positions, and a second actuating means (4 6) connected to the first carriage (44) in order to displace the latter and the lens support (29), when it is in its first position, between a first position in which the lens (L) carried by the lens support is displaced from the hole (34) of the Table 17, and a second position in which the said lens is pressed against the adhesive surface of the adhesive tape (9a) through the hole (34) of the Table and a hole of the peel-off tape (9b).

11. Apparatus according to Claim 10, characterised in that it also comprises a second carriage (65) that is movably mounted with respect to the Table 17 in a direction parallel to the predetermined path of the composite tape (9), a third actuating means 64 mounted on the second carriage and connected to the buffer (31) in order to displace the latter between a first position in which the buffer is moved from the composite tape (9) and a second position in which the said buffer is in the immediate vicinity of the non-adhesive surface of the adhesive tape (9a) of the composite tape, a third carriage (66) movably mounted on the second carriage (65) in a direction perpendicular to the predetermined path of the composite tape (9), the said cutting device (32) being carried by the third carriage, a fourth actuating means (67) mounted between the second and third carriages (65) and (66) in order to displace the said third carriage between a first position in which the cutting device (32) is moved from the composite tape (9) and a second position in which the cutting device is operational in order to cut the adhesive tape (9a), and a fourth actuating means (73) connected to the second carriage (65) in order to displace the latter between a first position in which the buffer (31) is aligned with the hole (34) of the Table 17 and a second position in which the cutting device (32) is aligned with the said hole (34) of the Table.

12. Apparatus according to claim 11, characterised in that the cutting device (32) comprises a support (74, 75) rotatably mounted on the third carriage about an axis (76) which is perpendicular to the predetermined path of the composite tape (9) and which, in the second position of the second carriage (65), is aligned with the axis of the hole (34) of the Table 17, two cutting blades (83) mounted on the said support (74, 75) and extending parallel to the said axis (76) and equidistant from the latter, and a second motor (78) mounted on the third carriage (66) and coupled to the said support (74, 75) in order to rotate the latter together with the two cutting blades (83) about the said axis.

13. Apparatus according to Claim 12, characterised in that the distance of the two cutting blades (83) relative to the said axis (76) can be adjusted.

14. Apparatus according to any one of claims 10 to 13, characterised in that it also comprises a movable jaw (35) including a circular hole (36) that has an internal diameter corresponding to the hole (34) of the Table 17 and which is axially aligned with the said hole (34), the said jaw (35) being movably mounted relative to the Table 17 in a direction substantially parallel to the axis of the hole (34) of the Table, and a fifth actuating means (42) connected to the movable jaw (35) in order to displace the latter between a first position in which it is moved from the composite tape (9) and a second position in which the composite tape is squeezed between the said movable jaw and the region (17a) of the Table (17) which adjoins the hole (34) of the latter and which forms a fixed jaw.

EP 0 285 490 B1

FIG-1

FIG-2

FIG-3

EP 0 285 490 B1